# FASCICULE DE BREVET EUROPEEN

(11) **EP 3 395 690 B1**
(45) Date de publication et mention de la délivrance du brevet: **23.09.2020**
(21) Numéro de dépôt: 18162417.2
(22) Date de dépôt: 16.03.2018
(51) Int. Cl.: B64D 33/02, B64C 27/04, B64C 27/00

(54) **AERONEF AYANT UN SYSTEME D'ENTREE D'AIR STATIQUE AVEC UN SEPARATEUR, ET PROCEDE ANTIVIBRATOIRE**
LUFTFAHRZEUG MIT EINEM EINLASSSYSTEM FÜR STATISCHE LUFT MIT EINEM ABSCHEIDER, UND SCHWINGUNGSDÄMPFENDES VERFAHREN
AIRCRAFT HAVING A STATIC AIR-INTAKE SYSTEM WITH A SEPARATOR, AND ANTI-VIBRATION METHOD

(30) Priorité: 27.04.2017 FR 1770425
(43) Date de publication de la demande: 31.10.2018
(73) Titulaire: Airbus Helicopters, 13725 Marignane Cedex (FR)
(72) Inventeur: DESVIGNE, Damien, 13090 Aix en Provence (FR)
(74) Mandataire: Pouillot, Laurent Pierre Paul

(56) Documents cités:
- EP-A1- 2 743 178
- EP-A1- 2 853 493
- EP-A1- 2 995 556
- AU-B2- 621 216
- US-A1- 2002 182 062

## Description

La présente invention concerne un aéronef comprenant un système d'entrée d'air statique avec un séparateur, et un procédé antivibratoire. L'invention se trouve donc dans le domaine technique des systèmes d'entrée d'air qui alimentent en air une installation motrice d'un aéronef. Plus particulièrement, l'invention est relative à un aéronef à voilure tournante.

Un giravion est usuellement muni d'une cellule délimitée par une enveloppe extérieure. Cette cellule comporte un tronçon avant portant notamment un rotor principal. Ce tronçon avant peut être prolongé par un ensemble arrière. Cet ensemble arrière peut inclure une poutre de queue qui porte éventuellement un rotor de contrôle du mouvement en lacet du giravion et/ou un empennage et/ou une dérive.

De plus, un giravion comporte usuellement une installation motrice comprenant au moins un moteur voire au moins une boîte de transmission de puissance. Par exemple, un giravion est muni d'au moins un moteur pour entraîner en rotation au moins un rotor principal via une boîte de transmission de puissance. Ce rotor principal participe au moins partiellement à la sustentation voire à la propulsion du giravion.

Dès lors, le tronçon avant peut comporter de bas en haut une barque, une partie centrale incluant un poste de pilotage, puis une partie supérieure. L'installation motrice peut reposer sur un plancher dénommé « plancher mécanique », et peut se situer soit dans la partie centrale soit dans la partie supérieure.

La partie supérieure est surplombée par le rotor principal.

De plus, la partie supérieure comporte un ensemble structural supérieur de l'enveloppe extérieure formant des capotages qui entourent un espace interne. Cet espace interne accueille l'installation motrice ou est en communication fluidique avec l'installation motrice. Le terme « capotage » peut désigner un capot, une structure mobile, un carénage, un caisson profilé voire cloisonné... Eventuellement, l'ensemble structural supérieur est optimisé pour limiter la traînée aérodynamique de l'aéronef. L'ensemble structural supérieur peut comprendre une face avant dirigée vers l'avant de l'aéronef, une face arrière dirigée vers l'arrière de l'aéronef, une face supérieure dirigée vers un rotor principal, et deux faces latérales.

Pour acheminer l'air provenant de l'extérieur de l'aéronef vers l'installation motrice, l'aéronef comporte un système d'entrée d'air.

Par exemple, un système d'entrée d'air peut équiper la partie supérieure. Un tel système d'entrée d'air comprend au moins une bouche d'entrée d'air ménagée dans l'ensemble structural supérieur. La bouche d'entrée d'air débouche sur l'espace interne de la partie supérieure. Deux types de système d'entrée d'air sont connus.

Un premier système d'entrée d'air est qualifié de « dynamique ». Un tel premier système d'entrée d'air comporte une bouche d'entrée d'air dynamique qui est alimentée en air extérieur principalement sous l'effet de la vitesse d'avancement de l'aéronef. La bouche d'entrée d'air dynamique peut être agencée en amont de l'espace interne en communication fluidique avec l'installation motrice, au regard d'une direction allant du nez de l'aéronef vers la queue de l'aéronef. La bouche d'entrée d'air dynamique est ainsi dirigée face à un flux d'air lorsque l'aéronef avance vers l'avant. Par exemple, la bouche d'entrée d'air dynamique est ménagée dans une face avant de l'ensemble structural supérieur. La bouche d'entrée d'air peut aussi définir une ouverture de passage sensiblement normale au flux d'air lorsque l'aéronef avance vers l'avant en faisant face à ce flux d'air. En raison de cet agencement, un premier système d'entrée d'air est parfois dénommé « entrée d'air axiale ».

L'utilisation d'un premier système d'entrée d'air est particulièrement intéressante durant une phase de vol d'avancement de l'aéronef. Par contre, au cours d'une phase de vol stationnaire, un tel premier système d'entrée d'air est moins performant.

Un deuxième système d'entrée d'air est qualifié de « statique ». Un deuxième système d'entrée d'air statique comporte une bouche d'entrée d'air statique qui est alimentée en air extérieur principalement sous l'effet de l'aspiration générée par un ou des moteurs. La bouche d'entrée d'air statique définit une ouverture de passage qui ne fait pas directement face au flux d'air incident lors de l'avancement du giravion.

La bouche d'entrée d'air statique peut être agencée an aval de l'espace interne en communication fluidique avec l'installation motrice, au regard d'une direction allant du nez de l'aéronef vers la queue de l'aéronef. La bouche d'entrée d'air statique peut aussi être agencée sur le côté d'un tel espace interne. Ainsi, une bouche d'entrée d'air statique peut être ménagée sur une face arrière de l'ensemble structural supérieur et donc selon le sens contraire à l'écoulement d'air, ou sur une face latérale voire supérieure de l'ensemble structural supérieur.

Eventuellement, un giravion peut comprendre à la fois un système d'entrée d'air dynamique et un système d'entrée d'air statique.

En fonction de l'architecture d'un giravion et des missions à réaliser, la mise en place d'un système d'entrée d'air statique s'avère intéressante. En effet, un système d'entrée d'air statique présente usuellement des performances élevées durant un vol stationnaire, pour lequel l'installation motrice requiert un flux d'air important pour générer une puissance importante. L'hélicoptère H130® comporte par exemple un système d'entrée d'air statique pour alimenter le moteur principal.

Par ailleurs, un système d'entrée d'air statique ou un système d'entrée d'air dynamique peut comprendre une grille agencée au niveau de la bouche d'entrée d'air. Classiquement, une telle grille vise à préserver l'installation motrice de parasites, tels que du sable, des corps étrangers et à prévenir le choc à l'oiseau.

Eventuellement, un larmier est aussi mis en place pour préserver l'installation motrice des ruissellements d'eau.

Les documents US 2002/182062, EP 2853493, EP 2743178, AU 621216 et EP 2995556 sont aussi connus.

La présente invention a alors pour objet de proposer un système d'entrée d'air statique innovant pour tendre à réduire un niveau vibratoire d'un giravion.

Selon l'invention, un aéronef, tel que défini dans la revendication 1, est muni d'un système d'entrée d'air statique pour aspirer un air extérieur présent dans un milieu extérieur à l'aéronef et pour acheminer ledit air extérieur vers au moins un moteur de l'installation motrice de l'aéronef, ledit aéronef comportant un tronçon avant qui inclut un rotor principal participant au moins à la sustentation de l'aéronef, ledit aéronef comportant un ensemble arrière.

L'ensemble arrière peut comprendre au moins une poutre de queue et/ou au moins une dérive et/ou au moins un empennage et/ou au moins un système de contrôle du mouvement en lacet par exemple tel qu'un rotor arrière.

De plus, l'aéronef s'étend longitudinalement le long d'un plan antéropostérieur selon un sens d'avancement vers l'avant d'une extrémité arrière de l'ensemble arrière jusqu'à un nez du tronçon avant, ledit aéronef s'étendant transversalement d'un premier flanc à un deuxième flanc de part et d'autre du plan antéropostérieur, ledit tronçon avant comportant un ensemble structural supérieur situé sous le rotor principal, ledit système d'entrée d'air statique comprenant une bouche d'entrée d'air statique, ladite bouche d'entrée d'air statique comprenant une ouverture de passage ménagée dans ledit ensemble structural supérieur, ladite ouverture de passage formant une interface entre ledit milieu et un espace interne dudit ensemble structural supérieur.

L'ensemble structural supérieur comprend une face arrière dirigée vers l'ensemble arrière et une face supérieure dirigée vers le rotor principal qui délimite partiellement un espace interne de cet ensemble structural supérieur. La bouche d'entrée d'air statique comprend une ouverture de passage ménagée dans la face arrière ou la face supérieure de l'ensemble structural supérieur.

De plus, ce système d'entrée d'air statique comprend au moins un séparateur partageant ladite ouverture de passage en au moins deux lumières distinctes, ledit séparateur comprenant une première portion prolongée par une deuxième portion, la première portion s'étendant dans ledit espace interne et la deuxième portion s'étendant en dehors dudit espace interne.

Dès lors, l'ouverture de passage met en communication fluidique l'espace interne et un milieu qui est extérieur à l'aéronef. Cette ouverture de passage est partagée en au moins deux surfaces de passage distinctes qui sont dénommées « lumières » par commodité par au moins un séparateur.

Le plan antéropostérieur peut être un plan vertical de symétrie de l'aéronef s'étendant selon un axe de référence longitudinal et un axe de référence en élévation de l'aéronef.

L'ensemble structural supérieur comporte alors des capotages délimitant au moins un espace interne. L'installation motrice peut être localisée dans cet espace interne ou peut être en communication fluidique avec cet espace interne.

Un aéronef est sujet au risque d'apparition du phénomène de sillage, connu sous l'expression « tail-shake » en langue anglaise. Ce phénomène est un phénomène vibratoire d'un ensemble arrière du giravion durant lequel cet ensemble arrière vibre sous l'effet d'un flux d'air turbulent provenant le plus souvent des parties hautes, fixes (décollement d'un flux d'air aux capots ou aux abords d'excroissances) comme dynamiques (décollement d'un flux d'air à la tête rotor, au rotor principal).

Un décollement d'un flux d'air au niveau de l'ensemble structural supérieur peut ainsi générer un flux d'air turbulent dirigé vers l'ensemble arrière. Des flux d'air tourbillonnaires peuvent alors exciter un ensemble arrière de l'aéronef sur une large bande de fréquences. Ces structures d'air tourbillonnaires sont donc susceptibles d'exciter une poutre de queue et/ou une dérive et/ou un empennage à une fréquence égale à une fréquence d'un des modes propres de flexion ou de torsion de cette poutre de queue et/ou de cette dérive et/ou de cet empennage conduisant ainsi à l'apparition du phénomène de « tail-shake ».

De plus, la traînée aérodynamique de l'aéronef peut être augmentée de manière significative, ce qui peut tendre à réduire le rayon d'action de l'aéronef ou de manière plus générale à réduire les performances de cet ensemble arrière.

La présente invention propose alors d'équiper l'aéronef avec un système d'entrée d'air statique muni notamment d'un séparateur. Le séparateur inclut une portion interne localisée dans l'espace interne de l'ensemble structural supérieur. De plus, le séparateur inclut une portion externe localisée en dehors de cet espace interne, par exemple sensiblement parallèlement à l'écoulement d'air environnant. La portion interne est importante pour lutter contre le phénomène « tail-shake ». L'intérêt de cette portion interne est notamment non évident dans la mesure où les tourbillons néfastes sont situés en dehors de l'entrée d'air statique. A l'inverse, la portion externe peut être étonnamment relativement courte mais elle est orientée parallèlement relativement à l'écoulement d'air environnant.

En effet, la demanderesse note qu'à l'inverse de préjugés, le fonctionnement d'une entrée d'air statique de l'art antérieur peut avoir un impact sur l'aéronef en dehors d'une phase de vol stationnaire. Une entrée d'air statique est susceptible de perturber l'écoulement de l'air aux abords du giravion par des effets d'interaction avec cet écoulement d'air durant une phase de vol d'avancement vers l'avant.

Dès lors, le séparateur permet de réduire significativement les interactions aérodynamiques latérales liées à l'aspiration d'air dans le système d'entrée d'air. Le séparateur permet ainsi de réduire la déstabilisation des structures turbulentes environnantes qui sont convectées vers l'aval. La réduction des interactions aérodynamiques au niveau de la bouche d'entrée d'air statique par le séparateur peut induire une baisse de l'intensité et/ou une modification de la signature spectrale des tourbillons générés au niveau des parties hautes de l'aéronef, à savoir au niveau de l'ensemble structural supérieur et du rotor principal. Le risque d'apparition du phénomène de « tail-shake » est alors réduit.

Un tel séparateur peut aussi avoir un impact négligeable sur la faculté du système d'entrée d'air statique à aspirer de l'air.

De plus, les dimensions du séparateur peuvent être minimisées pour conférer une masse relativement faible à ce séparateur.

Dès lors, le séparateur peut tendre à limiter les risques d'apparition du phénomène de tail-shake, tout en ayant un impact limité par ailleurs.

De plus, la réduction des interactions aérodynamiques au niveau de la bouche d'entrée d'air statique peut améliorer de fait l'efficacité aérodynamique de l'ensemble arrière qui fonctionne dans un flux d'air moins perturbé.

En outre, la traînée aérodynamique de l'aéronef peut être réduite.

L'aéronef peut de plus comporter une ou plusieurs des caractéristiques qui suivent.

Selon un mode de réalisation, plusieurs séparateurs peuvent être agencés. Par exemple, les séparateurs définissent plusieurs lumières ayant chacune une dimension transversale sensiblement équivalente. A titre illustratif, deux séparateurs peuvent ménager trois lumières s'étendant transversalement sur une distance sensiblement égale au tiers de la longueur transversale de la bouche d'entrée d'air statique.

Selon un mode de réalisation, a deuxième portion peut s'étendre selon une direction longitudinale sensiblement parallèle au plan antéropostérieur et/ou à un sens d'écoulement dudit air extérieur autour de l'ouverture de passage lorsque ledit aéronef effectue un vol d'avancement vers l'avant en l'absence de vent et sans dérapage.

Le placement de la deuxième portion sensiblement parallèlement et donc longitudinalement à l'écoulement environnant, à savoir à proximité immédiate du séparateur, peut s'avérer bénéfique au fonctionnement de l'invention.

Selon un mode de réalisation, le séparateur pouvant s'étendre transversalement selon une direction transversale d'une première face latérale à une deuxième face latérale, ladite direction transversale étant perpendiculaire au plan antéropostérieur, ladite première face latérale et ladite deuxième face latérale peuvent être disposées transversalement de part et d'autre dudit plan antéropostérieur.

La première face latérale et la deuxième face latérale peuvent être symétriques ou asymétriques l'une par rapport à l'autre au regard du plan antéropostérieur.

Selon un autre mode de réalisation, la première face latérale et la deuxième face latérale peuvent être planes ou courbées par exemple.

Selon un mode de réalisation, le séparateur peut avoir une épaisseur séparant transversalement la première face latérale et la deuxième face latérale, ladite épaisseur étant inférieure à un centimètre.

Le terme « épaisseur » fait référence à un écartement entre la première face latérale et la deuxième face latérale. Chaque point de la première face latérale est distant d'un point correspondant de la deuxième face latérale par un dit écartement dénommé épaisseur, ces deux points étant situés sur une droite orthogonale à un plan de référence.

L'expression « ladite épaisseur étant inférieure à un centimètre » signifie que l'épaisseur la plus grande entre deux points du séparateur est inférieure à un centimètre.

Une telle épaisseur permet de limiter l'impact du séparateur sur l'aspiration de l'air extérieur.

L'épaisseur du séparateur peut être constante. Par exemple, la première face latérale et la deuxième face latérale sont parallèles.

De manière alternative, ladite épaisseur n'est pas constante, ledit séparateur présentant une loi en épaisseur prédéterminée.

La première face latérale et la deuxième face latérale ne sont alors pas parallèles entre elles.

Selon un mode de réalisation, la première face latérale pouvant s'étendre d'une première tranche avant vers une première tranche arrière, la deuxième face latérale s'étendant d'une deuxième tranche avant vers une deuxième tranche arrière, le séparateur peut comporter un bord avant arrondi reliant la première tranche avant à la deuxième tranche avant, ledit séparateur comportant un bord arrière arrondi reliant la première tranche arrière à la deuxième tranche arrière.

Le terme « arrondi » désigne un bord « courbé » ne présentant pas de points anguleux. Chaque bord peut comprendre des sections en forme d'arc de cercle, d'arc d'ellipse... Par exemple, chaque bord peut prendre la forme d'un demi-cylindre ou d'un demi-cône à base circulaire ou elliptique.

Selon un mode de réalisation, l'ouverture de passage pouvant présenter une dimension caractéristique prédéterminée, ladite dimension caractéristique étant égale à la racine carrée d'une aire d'une projection de ladite ouverture de passage dans un plan de projection, ledit plan de projection étant orthogonal à un sens d'écoulement dudit air autour de l'ouverture de passage lorsque ledit aéronef effectue un vol d'avancement vers l'avant en l'absence de vent et sans dérapage, ladite première portion peut s'étendre dans ledit espace interne selon un sens parallèle audit plan antéropostérieur sur une première longueur supérieure ou égale au quart de ladite dimension caractéristique prédéterminée.

L'expression « première longueur» désigne la plus petite dimension de la première portion parallèlement au sens d'avancement vers l'avant de l'aéronef, à savoir par exemple sensiblement selon le sens allant de la queue vers le nez de l'aéronef.

Selon un mode de réalisation, ladite ouverture de passage présentant une dimension caractéristique prédéterminée, étant égale à la racine carrée d'une aire d'une projection de ladite ouverture de passage dans un plan de projection, ledit plan de projection étant orthogonal à un sens d'écoulement de l'air autour de l'ouverture de passage lorsque ledit aéronef effectue un vol d'avancement vers l'avant en l'absence de vent et sans dérapage, ladite deuxième portion s'étend en dehors dudit espace interne selon ledit sens d'écoulement sur une deuxième longueur supérieure ou égale à la moitié de ladite dimension caractéristique prédéterminée.

Selon un mode de réalisation, la première longueur peut être supérieure à la moitié de ladite dimension caractéristique prédéterminée, ladite deuxième longueur étant comprise entre la moitié de ladite dimension caractéristique prédéterminée incluse et un premier quotient inclus, ce premier quotient étant égal à neuf fois ladite dimension caractéristique D prédéterminée divisée par quatre soit 9D/4.

Selon un mode de réalisation et par exemple en présence d'une ouverture de passage circulaire, la première longueur est comprise entre ledit quart de ladite dimension caractéristique prédéterminée incluse et un deuxième quotient inclus, ce deuxième quotient étant égal à neuf fois ladite dimension caractéristique D prédéterminée divisée par seize soit 9D/16. La deuxième longueur est comprise entre la moitié de ladite dimension caractéristique prédéterminée incluse et un premier quotient inclus, ce premier quotient étant égal à neuf fois ladite dimension caractéristique D prédéterminée divisée par quatre soit 9D/4.

Selon un mode de réalisation, lesdites au moins deux lumières peuvent être symétriques au regard dudit séparateur.

Selon un mode de réalisation, ladite deuxième portion pouvant s'étendre en élévation sur une hauteur d'une base à un sommet, ladite deuxième portion pouvant s'étendre longitudinalement d'une première extrémité, éventuellement solidaire de la première portion, jusqu'à une deuxième extrémité, ladite hauteur peut décroitre en allant de la première extrémité vers la deuxième extrémité selon une loi prédéterminée de variation de ladite hauteur.

Selon un mode de réalisation, ladite deuxième portion pouvant s'étendre longitudinalement en amont et en aval de l'ouverture de passage au regard d'un sens d'écoulement dudit air extérieur par rapport à l'aéronef, ledit séparateur a une forme de T.

Selon un mode de réalisation, ladite ouverture de passage pouvant décrire un disque qui est centré sur un axe de symétrie et qui présente un diamètre, l'axe de symétrie séparant un tronçon amont et un tronçon aval de la deuxième portion, le tronçon amont s'étendant sur une longueur d'extension amont et le tronçon aval s'étendant sur une longueur d'extension aval, la longueur d'extension amont et la longueur d'extension aval sont chacune égales à ladite deuxième longueur.

L'axe de symétrie peut être parallèle au plan antéropostérieur.

Outre un aéronef, l'invention concerne un procédé de traitement d'un phénomène vibratoire, notamment dit « tail-shake » d'un aéronef muni d'un système d'entrée d'air statique pour aspirer l'air extérieur présent dans un milieu extérieur à l'aéronef et pour acheminer ledit air extérieur vers au moins un moteur de l'installation motrice de l'aéronef, ledit procédé étant défini dans la revendication 14.

De plus, le procédé peut présenter au moins une des caractéristiques précédemment décrites.

L'invention et ses avantages apparaîtront avec plus de détails dans le cadre de la description qui suit avec des exemples donnés à titre illustratif en référence aux figures annexées qui représentent :
- la figure 1, un schéma d'un aéronef selon l'invention,
- la figure 2, un schéma illustrant un séparateur,
- la figure 3, un diagramme illustrant l'intérêt de l'invention,
- les figures 4 à 12, des schémas illustrant des systèmes d'entrées d'air statiques selon l'invention, et
- la figure 13, un schéma illustrant un système muni de deux séparateurs.

Les éléments présents dans plusieurs figures distinctes sont affectés d'une seule et même référence.

Trois directions X, Y et Z orthogonales les unes par rapport aux autres sont représentées sur les figures.

La première direction X peut représenter un axe de référence longitudinal.

La deuxième direction Y peut représenter un axe de référence transversal.

Enfin, la troisième direction Z est dite en élévation.

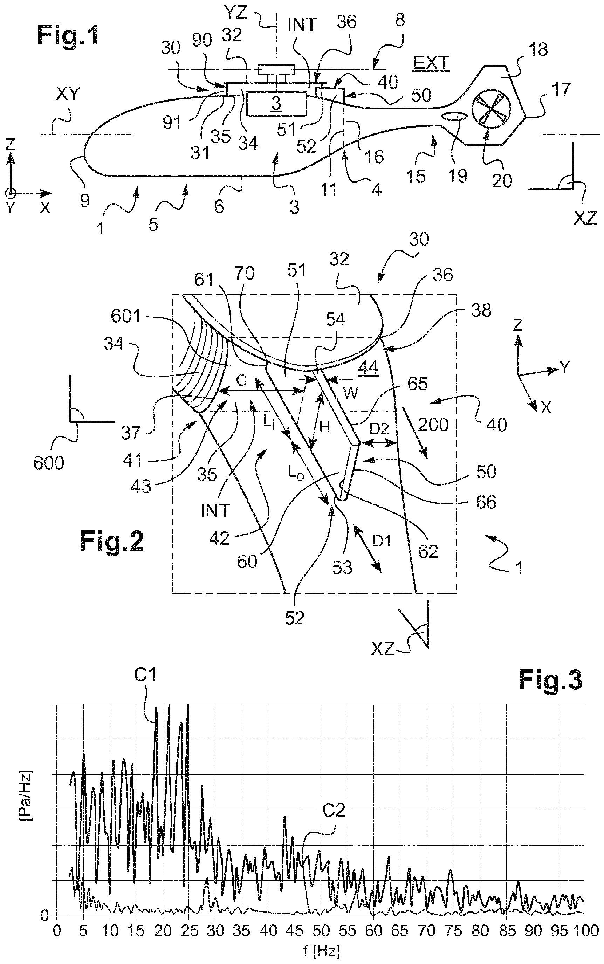

La figure 1 présente un aéronef 1 selon l'invention.

Cet aéronef 1 comporte un tronçon avant 5 et un ensemble arrière 15. En particulier, le tronçon avant 5 et l'ensemble arrière 15 sont situés dans le prolongement l'un de l'autre selon le premier axe X.

L'aéronef 1 s'étend transversalement de part et d'autre d'un plan antéropostérieur XZ vertical d'un premier flanc 3 vers un deuxième flanc 4.

Cet aéronef 1 s'étend de plus longitudinalement le long du plan antéropostérieur XZ et selon un sens d'avancement vers l'avant de l'aéronef, d'une extrémité arrière 17 d'une queue de l'ensemble arrière jusqu'à un nez 9 du tronçon avant. Ainsi l'aéronef 1 présente de part et d'autre d'un plan transversal YZ une portion avant comprenant ledit nez 9 et une portion arrière comprenant l'extrémité arrière 17.

L'aéronef 1 s'étend en outre de bas en haut d'un fond vers un sommet. Ainsi, l'aéronef 1 présente de part et d'autre d'un plan dit « horizontal » XY une section supérieure comprenant ledit sommet et une section inférieure comprenant ledit fond.

Le plan antéropostérieur XZ, le plan transversal YZ et le plan horizontal XY sont perpendiculaires les uns aux autres.

Le tronçon avant 5 peut comprendre de bas en haut une barque munie d'un fond 6 et éventuellement munie d'un atterrisseur, une partie centrale 7 éventuellement munie d'un poste de pilotage, puis un ensemble structural supérieur 30. L'ensemble structural supérieur 30 est surmonté d'un rotor principal 8 qui participe à la sustentation de l'aéronef 1, voire à la propulsion de cet aéronef 1.

Par ailleurs, l'ensemble arrière 15 peut comporter au moins une poutre de queue 16 portant au moins un empennage 19 et/ou au moins une dérive 18 et/ou au moins un dispositif 20 de contrôle du mouvement en lacet de l'aéronef 1. Par exemple, le dispositif 20 de contrôle du mouvement en lacet de l'aéronef 1 inclut un rotor arrière.

De plus, le tronçon avant 5 loge une installation motrice 2 mettant en mouvement le rotor principal 8, voire le cas échéant un dispositif 20 de contrôle du mouvement en lacet de l'aéronef 1.

Dès lors, l'ensemble structural supérieur 30 peut comprendre des capotages divers pour délimiter un espace interne INT. Au moins un moteur de l'installation motrice 2 peut alors être logé dans cet espace interne INT ou peut être en communication fluidique avec cet espace interne INT.

Ainsi, l'ensemble structural supérieur 30 peut comprendre une face avant 31 dirigée vers l'avant de l'aéronef, une face arrière 33 dirigée vers l'ensemble arrière de l'aéronef, une face supérieure 32 dirigée vers le rotor principal 8, un plancher 35, deux côtés latéraux 34, 36 pour former une enceinte délimitant au moins partiellement l'espace interne INT.

Pour acheminer l'air provenant d'un milieu EXT qui est extérieur à l'aéronef 1, l'aéronef 1 comporte au moins un système d'entrée d'air mettant en relation fluidique l'espace interne INT avec ledit milieu EXT.

Par exemple, un système d'entrée d'air dynamique 90 peut alimenter en air extérieur l'espace interne lors de l'avancement vers l'avant de l'aéronef. A titre illustratif, le système d'entrée d'air dynamique 90 peut comprendre une entrée d'air dynamique 91 ménagée dans ladite face avant 31, et/ou encore des écopes latérales.

Indépendamment de cette possibilité, l'aéronef 1 comporte un système d'entrée d'air statique 40.

Ce système d'entrée d'air statique 40 inclut une bouche d'entrée d'air statique 41. Cette bouche d'entrée d'air statique 41 est munie d'une ouverture de passage 42 traversant l'ensemble structural supérieur 30. Dès lors, l'ouverture de passage 42 fait office d'une interface ouverte entre le milieu EXT extérieur à l'aéronef et l'espace interne INT. Principalement voire exclusivement sous l'effet d'une aspiration d'au moins un moteur de l'installation motrice, ledit air pénètre dans l'espace interne INT en traversant l'ouverture de passage 42.

Un vecteur normal à l'ouverture de passage 42 peut alors être dirigé sensiblement parallèlement à un sens d'écoulement 200 de l'air à proximité immédiate de l'aéronef lorsque l'aéronef effectue un vol d'avancement vers l'avant sans vent et sans dérapage, ce vecteur normal partant de l'ouverture de passage en s'éloignant de l'espace interne INT. Par exemple, l'ouverture de passage 42 est ainsi perforée dans la face arrière 33

Selon une variante décrite par la suite, le vecteur normal peut être orthogonal à ce sens d'écoulement 200. Par exemple, l'ouverture de passage 42 est ainsi faite dans la face supérieure 32.

En référence à la figure 2, le système d'entrée d'air statique 40 comprend au moins un séparateur 50. Ce séparateur 50 partage l'ouverture de passage 42 en au moins deux entrées dites « lumières 43, 44 » distinctes, voire symétriques. Le séparateur 50 comprend une première portion 51 qui s'étend dans l'espace interne sur toute la hauteur de l'ouverture de passage pour former les deux lumières. En particulier, la première portion 51 peut s'étendre selon un sens d'aspiration ASP1 d'air parallèle à un sens d'avancement vers l'avant de l'aéronef sur une première longueur Li. Les deux lumières 43, 44 sont par exemple symétriques l'une par rapport à l'autre au regard du séparateur 50.

La première portion 51 est prolongée par une deuxième portion 52 du séparateur qui s'étend en dehors de l'espace interne INT. En particulier, la deuxième portion 52 peut s'étendre selon un sens parallèle à un sens d'avancement vers l'avant de l'aéronef sur une deuxième longueur Lo. Par exemple la deuxième portion 52 s'étend sur la deuxième longueur Lo selon une direction longitudinale D1 sensiblement parallèle au plan antéropostérieur XZ et/ou au sens d'écoulement 200.

Ce séparateur 50 s'étend transversalement selon une direction transversale D2, perpendiculaire au plan antéropostérieur XZ, d'une première face latérale 60 à une deuxième face latérale 65. La première face latérale 60 et la deuxième face latérale 65 comprennent chacune une fraction présente dans la première portion et une fraction présente dans la deuxième portion 52.

Eventuellement, la première face latérale 60 et la deuxième face latérale 65 sont disposées transversalement de part et d'autre du plan antéropostérieur XZ, par exemple symétriquement l'une par rapport à l'autre.

Selon un aspect et en présence d'un unique séparateur, une même distance latérale C sépare alors transversalement le séparateur de deux bords 37, 38 de la bouche d'entrée d'air.

Par ailleurs, l'épaisseur W du séparateur est représentée par un écartement séparant transversalement la première face latérale 60 et la deuxième face latérale 65.

Cette épaisseur W peut être inférieure à un centimètre.

De plus, l'épaisseur W peut être selon la figure 2 constante, ou selon d'autres variantes peut varier entre des points différents en présentant une loi en épaisseur prédéterminée.

Selon un autre aspect, la première face latérale 60 s'étend longitudinalement d'une première tranche avant 61 vers une première tranche arrière 62. Le terme « tranche » désigne une extrémité. De même, la deuxième face latérale 65 s'étend longitudinalement d'une deuxième tranche avant non visible sur la figure 2 vers une deuxième tranche arrière 66. Dès lors, le séparateur 50 peut inclure un bord avant arrondi 70 qui relie la première tranche avant 61 à la deuxième tranche avant, et un bord arrière arrondi 71 qui relie la première tranche arrière 62 à la deuxième tranche arrière 66.

Le terme « arrondi » fait référence à une forme « courbe », et non nécessairement circulaire.

Par ailleurs, la première portion 51 peut s'étendre sur une hauteur égale à la hauteur de l'espace interne INT pour totalement séparer les deux lumières 43, 44.

La deuxième portion 52 peut aussi s'étendre en élévation sur une hauteur H d'une base 53 à un sommet 54. Cette hauteur H peut être constante ou peut être évolutive selon une loi prédéterminée de variation de ladite hauteur en allant de la première extrémité 55 vers la deuxième extrémité 56 de la deuxième portion 52.

Dans ce contexte, le séparateur peut être défini au moins à l'aide d'une loi de hauteur H et/ou d'une première longueur Li et/ou d'une deuxième longueur Lo et/ou d'une loi d'épaisseur W et/ou d'une distance latérale C de centrage, et/ou d'un plan de forme de la première face latérale 60 et/ou d'un plan de forme de la deuxième face latérale 65 et/ou de la forme du bord avant 70 et/ou de la forme du bord arrière 71.

Une ou plusieurs de ces dimensions peuvent être déterminées en fonction d'une dimension caractéristique D prédéterminée de la bouche d'entrée d'air. Cette dimension caractéristique D prédéterminée est égale à la racine carrée d'une aire d'une projection 601 dans un plan de projection 600 de ladite ouverture de passage 42, éventuellement non obturée par les séparateurs, ledit plan de projection étant orthogonal au sens d'écoulement 200 dudit air autour de l'ouverture de passage 42 lorsque ledit aéronef effectue un vol d'avancement vers l'avant en l'absence de vent et sans dérapage.

Ainsi, la première portion 51 peut s'étendre sur une première longueur Li supérieure ou égale au quart de la dimension caractéristique D prédéterminée.

La deuxième portion 52 peut s'étendre sur une deuxième longueur Lo aussi supérieure ou égale à la moitié de cette dimension caractéristique D prédéterminée.

La figure 3 présente un diagramme illustrant l'avantage de l'invention. Ce diagramme présente en abscisse des fréquences et en ordonnée le module de la transformée de Fourier des pressions fluctuantes exprimé en Pascal (Pa) par Hertz (Hz). De manière équivalente, l'ordonnée pourrait représenter la densité spectrale de puissance exprimée en Pascal au carré (Pa²) par Hertz (Hz)

La courbe C1 illustre la présence d'un flux fortement turbulent en l'absence du séparateur. La courbe C2 illustre le spectre de pressions en présence du séparateur.

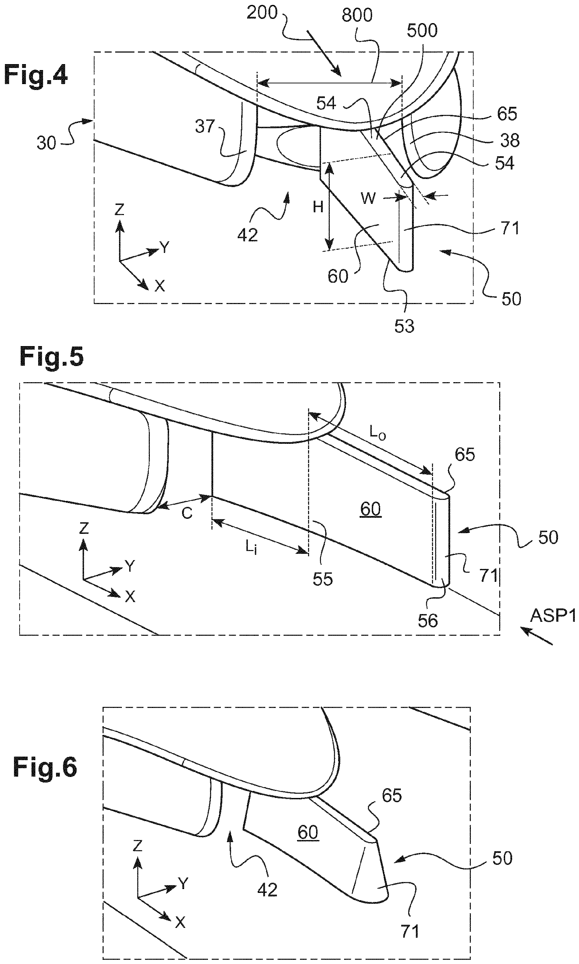

Les figures 4 à 11 illustrent divers systèmes d'entrée d'air statiques selon l'invention.

Selon les figures 4 à 8, l'ouverture de passage est orthogonale à un vecteur sensiblement parallèle à un sens d'écoulement 200 de l'air à proximité du séparateur et de l'aéronef.

Selon les figures 4 et 5, l'ouverture de passage 42 a une forme de C et s'étend entre deux bords latéraux 37, 38 de l'ensemble structural supérieur 30.

La première face latérale 60 et la deuxième face latérale sont en outre parallèles l'une à l'autre. Une plaque 500 peut relier les sommets de la première face latérale 60 et de la deuxième face latérale 65.

Selon cet exemple, l'épaisseur W est constante. Par contre la hauteur H de la deuxième portion décroit en s'éloignant de la première portion 51.

La première face latérale 60 et la deuxième face latérale 65 sont chacune distantes d'un bord latéral d'une distance C égale à la différence entre une longueur 800 transversalement de l'ouverture de passage 42 et l'épaisseur W du séparateur.

En outre et en référence à la figure 5, la première longueur Li peut être supérieure à la moitié de la dimension caractéristique D prédéterminée. La deuxième longueur Lo peut être comprise entre la moitié de la dimension caractéristique D prédéterminée incluse et un premier quotient inclus, ce premier quotient étant égal à neuf fois ladite dimension caractéristique D prédéterminée divisée par quatre.

Selon la variante de la figure 6, l'épaisseur W peut être variable.

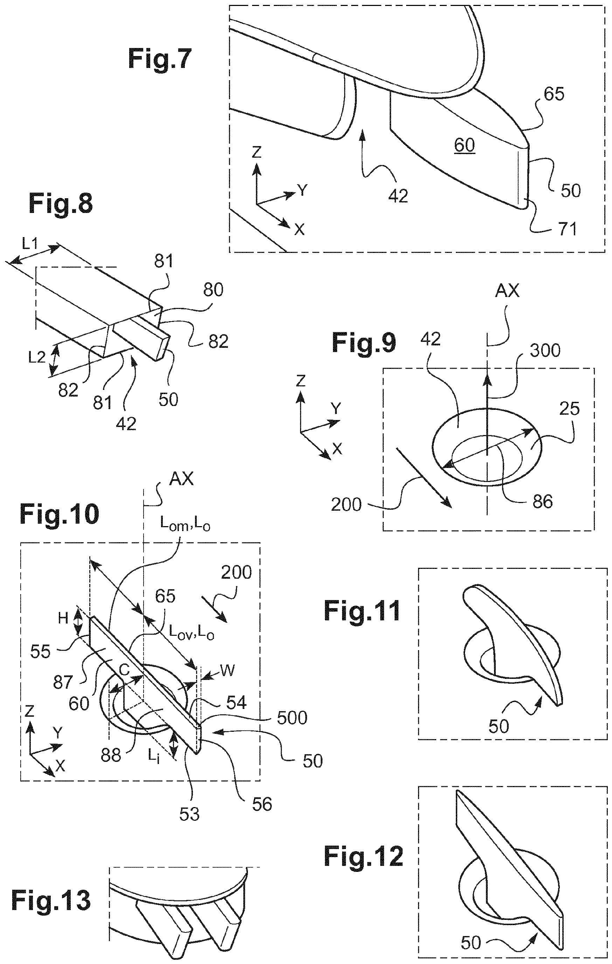

Selon la variante de la figure 7, la première face latérale 60 et la deuxième face latérale 65 ne sont pas parallèles.

Selon la variante de la figure 8, l'ouverture de passage 42 peut avoir la forme d'un parallélogramme 80. Ce parallélogramme 80 présente de fait quatre côtés, deux côtés 81 s'étendant chacun sur une première distance d'extension L1 et deux autres côtés 82 s'étendant chacun sur une deuxième distance d'extension L2. Dès lors, la dimension caractéristique D prédéterminée peut être égale à la racine carrée d'un produit de la première distance d'extension L1 et de la deuxième distance d'extension L2.

Les caractéristiques décrites précédemment sont applicables au séparateur de cette figure 8.

Selon les figures 9 à 12, l'ouverture de passage 42 peut avoir la forme d'un disque 85 qui est centré sur un axe de symétrie AX et qui présente un diamètre 86. Dès lors, la dimension caractéristique D prédéterminée peut être égale à la racine carrée du chiffre pi (π) multiplié par ce diamètre 86 divisé par 2.

Eventuellement et en référence à la figure 10, la première longueur Li peut être comprise entre le quart de ladite dimension caractéristique D prédéterminée incluse et un deuxième quotient inclus, ce deuxième quotient étant égal à neuf fois ladite dimension caractéristique D prédéterminée divisée par seize . La deuxième longueur Lo peut être comprise entre la moitié de la dimension caractéristique D prédéterminée incluse et ce premier quotient étant égal à neuf fois ladite dimension caractéristique D prédéterminée divisée par quatre.

Par ailleurs, la première face latérale 60 et la deuxième face latérale 65 sont en outre parallèles l'une à l'autre. Une plaque 500 peut relier les sommets voire les bases de la première face latérale 60 et de la deuxième face latérale 65.

Selon cet exemple, l'épaisseur W est constante. De même, la hauteur H de la deuxième portion est constante.

La première face latérale 60 et la deuxième face latérale 65 sont chacune distantes d'un bord latéral du disque d'une distance C égale à la différence entre le diamètre 86 et l'épaisseur W du séparateur.

Indépendamment de ces aspects, l'ouverture de passage peut être orthogonale à un vecteur 300 sensiblement normal à un sens d'écoulement 200 de l'air à proximité de l'aéronef.

En raison de cette orientation, la deuxième portion 52 peut s'étendre longitudinalement en amont et en aval de l'ouverture de passage 42 au regard du sens d'écoulement 200 de l'air extérieur par rapport à l'aéronef 1. La deuxième portion comporte alors un tronçon amont 87 et un tronçon aval 88 se rejoignant au niveau de l'axe de symétrie AX.

Dès lors, le séparateur 50 a une forme de T, la portion interne formant la jambe dudit T.

En outre, le tronçon amont 87 peut s'étendre longitudinalement sur une longueur d'extension amont Lom et le tronçon aval peut s'étendre sur une longueur d'extension aval Lov. La longueur d'extension amont Lom et la longueur d'extension aval Lov sont par exemple égales chacune à la deuxième longueur Lo.

Selon une réalisation illustrée sur la figure 13, le système comporte deux séparateurs.

## Revendications

1. Aéronef (1) muni d'un système d'entrée d'air statique (40) pour aspirer un air extérieur présent dans un milieu (EXT) extérieur à l'aéronef (1) et pour acheminer ledit air extérieur vers au moins un moteur d'une installation motrice (2) de l'aéronef (1), ledit aéronef (1) comportant un tronçon avant (5) qui inclut un rotor principal (8) participant au moins à la sustentation de l'aéronef (1), ledit aéronef (1) comportant un ensemble arrière (15), ledit aéronef (1) s'étendant longitudinalement le long d'un plan antéropostérieur (XZ) selon un sens d'avancement vers l'avant d'une extrémité arrière (17) de l'ensemble arrière jusqu'à un nez (9) du tronçon avant (5), ledit aéronef (1) s'étendant transversalement d'un premier flanc (3) à un deuxième flanc (4) de part et d'autre du plan antéropostérieur (XZ), ledit tronçon avant (5) comportant un ensemble structural supérieur (30) situé sous le rotor principal (8), ledit système d'entrée d'air statique (40) comprenant une bouche d'entrée d'air statique (41), ledit ensemble structural supérieur (30) comprenant une face arrière (33) dirigée vers l'ensemble arrière (15) et une face supérieure (32) dirigée vers le rotor principal (8) qui délimitent partiellement un espace interne (INT) dudit ensemble structural supérieur (30), ladite bouche d'entrée d'air statique comprenant une ouverture de passage (42) ménagée dans ledit ensemble structural supérieur (30), ladite ouverture de passage (42) étant ménagée dans la face arrière ou la face supérieure dudit ensemble structural supérieur (30), ladite ouverture de passage (42) formant une interface entre ledit milieu (EXT) et l' espace interne (INT) dudit ensemble structural supérieur (30),
**caractérisé en ce que** ledit système d'entrée d'air statique (40) comprend au moins un séparateur (50) partageant ladite ouverture de passage (42) en au moins deux lumières (43, 44) distinctes, ledit séparateur (50) comprenant une première portion (51) prolongée par une deuxième portion (52), la première portion (51) s'étendant dans ledit espace interne (INT) et la deuxième portion (52) s'étendant en dehors dudit espace interne (INT), ladite deuxième portion (52) s'étendant selon une direction longitudinale (D1) parallèle à un sens d'écoulement dudit air extérieur autour de l'ouverture de passage lorsque ledit aéronef effectue un vol d'avancement vers l'avant en l'absence de vent et sans dérapage.

2. Aéronef selon la revendication 1,
**caractérisé en ce que** ledit séparateur (50) s'étendant transversalement selon une direction transversale (D2) d'une première face latérale (60) à une deuxième face latérale (65), ladite direction transversale (D2) étant perpendiculaire au plan antéropostérieur (XZ), ladite première face latérale (60) et ladite deuxième face latérale (65) sont disposées transversalement de part et d'autre dudit plan antéropostérieur (XZ).

3. Aéronef selon l'une quelconque des revendications 1 à 2,
**caractérisé en ce que** ledit séparateur (50) s'étendant transversalement selon une direction transversale (D2) d'une première face latérale (60) à une deuxième face latérale (65), ladite direction transversale (D2) étant perpendiculaire au plan antéropostérieur (XZ), ledit séparateur (50) a une épaisseur (W) séparant transversalement la première face latérale (60) et la deuxième face latérale (65), ladite épaisseur (W) étant inférieure à un centimètre.

4. Aéronef selon la revendication 3,
**caractérisé en ce que** ladite épaisseur (W) n'est pas constante, ledit séparateur (50) présentant une loi en épaisseur prédéterminée.

5. Aéronef selon l'une quelconque des revendications 2 à 4,
**caractérisé en ce que** la première face latérale (60) s'étendant d'une première tranche avant (61) vers une première tranche arrière (62), la deuxième face latérale (65) s'étendant d'une deuxième tranche avant vers une deuxième tranche arrière (66), ledit séparateur (50) comporte un bord avant arrondi (70) reliant la première tranche avant (61) à la deuxième tranche avant, ledit séparateur (50) comportant un bord arrière arrondi (71) reliant la première tranche arrière (62) à la deuxième tranche arrière (66).

6. Aéronef selon l'une quelconque des revendications 1 à 5,
**caractérisé en ce que** ladite ouverture de passage (42) présentant une dimension caractéristique (D) prédéterminée, ladite dimension caractéristique (D) étant égale à la racine carrée d'une aire d'une projection de ladite ouverture de passage (42) dans un plan de projection, ledit plan de projection étant orthogonal à un sens d'écoulement dudit air autour de l'ouverture de passage lorsque ledit aéronef effectue un vol d'avancement vers l'avant en l'absence de vent et sans dérapage, ladite première portion (51) s'étend dans ledit espace interne (INT) selon un sens d'aspiration (ASP1) dudit air parallèle à un sens d'avancement vers l'avant de l'aéronef sur une première longueur (Li) supérieure ou égale au quart de ladite dimension caractéristique (D) prédéterminée .

7. Aéronef selon l'une quelconque des revendications 1 à 5,
**caractérisé en ce que** ladite ouverture de passage (42) présentant une dimension caractéristique (D) prédéterminée, ladite dimension caractéristique (D) étant égale à la racine carrée d'une aire d'une projection de ladite ouverture de passage (42) dans un plan de projection, ledit plan de projection étant orthogonal à un sens d'écoulement d'air autour de l'ouverture de passage lorsque ledit aéronef effectue un vol d'avancement vers l'avant en l'absence de vent et sans dérapage, ladite deuxième portion (52) s'étend en dehors dudit espace interne (INT) selon ledit sens d'écoulement sur une deuxième longueur (Lo) supérieure ou égale à la moitié de ladite dimension caractéristique (D) prédéterminée .

8. Aéronef selon les revendications 6 et 7,
**caractérisé en ce que** ladite première longueur (Li) est supérieure à la moitié de ladite dimension caractéristique (D) prédéterminée, ladite deuxième longueur (Lo) étant comprise entre la moitié de ladite dimension caractéristique (D) prédéterminée incluse et un premier quotient inclus, ce premier quotient étant égal à neuf fois ladite dimension caractéristique (D) prédéterminée divisée par quatre.

9. Aéronef selon les revendications 6 et 7,
**caractérisé en ce que** ladite deuxième longueur est comprise entre la moitié de ladite dimension caractéristique prédéterminée incluse et un premier quotient inclus, ce premier quotient étant égal à neuf fois ladite dimension caractéristique (D) prédéterminée divisée par quatre, ladite première longueur étant comprise entre ledit quart de ladite dimension caractéristique prédéterminée incluse et un deuxième quotient inclus, ce deuxième quotient étant égal à neuf fois ladite dimension caractéristique (D) prédéterminée divisée par seize.

10. Aéronef selon l'une quelconque des revendications 1 à 9,
**caractérisé en ce que** lesdites au moins deux lumières (43, 44) sont symétriques au regard dudit séparateur (50).

11. Aéronef selon l'une quelconque des revendications 1 à 10,
**caractérisé en ce que** ladite deuxième portion (52) s'étendant en élévation sur une hauteur (H) d'une base (53) à un sommet (54), ladite deuxième portion (52) s'étendant longitudinalement d'une première extrémité (55) jusqu'à une deuxième extrémité (56), ladite hauteur (H) décroit en allant de la première extrémité (55) vers la deuxième extrémité (56) selon une loi prédéterminée de variation de ladite hauteur.

12. Aéronef selon l'une quelconque des revendications 1 à 11, l'ouverture de passage étant ménagée dans la face supérieure dudit ensemble structural supérieur,
**caractérisé en ce que** ladite deuxième portion (52) s'étend longitudinalement en amont et en aval de l'ouverture de passage (42) au regard d'un sens d'écoulement (200) dudit air extérieur par rapport à l'aéronef (1), ledit séparateur (50) ayant une forme de T.

13. Aéronef selon la revendication 12 quand dépendante de revendication 7,
**caractérisé en ce que** ladite ouverture de passage (42) décrivant un disque (85) qui est centré sur un axe de symétrie (AX) et qui présente un diamètre (86), l'axe de symétrie (AX) séparant un tronçon amont (87) et un tronçon aval (88) de la deuxième portion (52), le tronçon amont (87) s'étendant sur une longueur d'extension amont (Lom) et le tronçon aval s'étendant sur une longueur d'extension aval (Lov), la longueur d'extension amont (Lom) et la longueur d'extension aval (Lov) sont égales chacune à ladite deuxième longueur.

14. Procédé de traitement d'un phénomène vibratoire d'un aéronef (1) muni d'un système d'entrée d'air statique (40) pour aspirer un air extérieur présent dans un milieu (EXT) extérieur à l'aéronef (1) et pour acheminer ledit air extérieur vers au moins un moteur de l'installation motrice (2) de l'aéronef (1), ledit aéronef (1) comportant un tronçon avant (5) qui porte un rotor principal (8) participant au moins à la sustentation de l'aéronef (1), ledit aéronef (1) comportant un ensemble arrière (15), ledit aéronef (1) s'étendant longitudinalement le long d'un plan antéropostérieur (XZ) selon un sens d'avancement vers l'avant d'une extrémité arrière (17) de l'ensemble arrière (15) jusqu'à un nez (9) du tronçon avant (5), ledit aéronef s'étendant transversalement d'un premier flanc (3) à un deuxième flanc (4) de part et d'autre du plan antéropostérieur (XZ), ledit tronçon avant (5) comportant un ensemble structural supérieur (30) situé sous le rotor principal (8), ledit ensemble structural supérieur (30) comprenant une face arrière (33) dirigée vers l'ensemble arrière (15) et une face supérieure (32) dirigée vers le rotor principal (8) qui délimitent partiellement un espace interne (INT) dudit ensemble structural supérieur (30), ledit système d'entrée d'air statique (40) comprenant une bouche d'entrée d'air statique (41) ménagée dans ledit ensemble structural supérieur (30), ladite ouverture de passage (42) étant ménagée dans la face arrière ou la face supérieure dudit ensemble structural supérieur (30), ladite bouche d'entrée d'air statique (41) comprenant une ouverture de passage (42) formant une interface entre ledit milieu (EXT) extérieur et un espace interne (INT) dudit ensemble structural supérieur (30),
**caractérisé en ce que** ledit procédé comporte l'étape suivante :
agencement d'au moins un séparateur (50) partageant ladite ouverture de passage (42) en au moins deux lumières (43, 44) distinctes, ledit séparateur (50) comprenant une première portion (51) prolongée par une deuxième portion (52), la première portion (51) s'étendant dans ledit espace interne (INT) et la deuxième portion (52) s'étendant en dehors dudit espace interne (INT), ladite deuxième portion (52) s'étendant selon une direction longitudinale (D1) parallèle à un sens d'écoulement dudit air extérieur autour de l'ouverture de passage lorsque ledit aéronef effectue un vol d'avancement vers l'avant en l'absence de vent et sans dérapage.

15. Procédé selon la revendication 14,
**caractérisé en ce que** ledit aéronef est selon au moins une des revendications 2 à 13.

## Patentansprüche

1. Luftfahrzeug (1), das mit einem statischen Lufteinlasssystem (40) versehen ist, um Außenluft anzusaugen, die in einem außerhalb des Luftfahrzeugs (1) befindlichen Medium (EXT) vorhanden ist, und um diese Außenluft zu mindestens einem Triebwerk einer Triebwerksanlage (2) des Luftfahrzeugs (1) zu leiten, wobei das Luftfahrzeug (1) einen vorderen Abschnitt (5) aufweist, der einen Hauptrotor (8) umfasst, der mindestens am Auftrieb des Luftfahrzeugs (1) beteiligt ist, wobei das Luftfahrzeug (1) eine hintere Baugruppe (15) aufweist, wobei sich das Luftfahrzeug (1) in Längsrichtung entlang einer anteroposterioren Ebene (XZ) in einer Vorwärtsrichtung von einem hinteren Ende (17) der hinteren Baugruppe zu einer Nase (9) des vorderen Abschnitts (5) erstreckt, wobei sich das Luftfahrzeug (1) in Querrichtung von einer ersten Flanke (3) zu einer zweiten Flanke (4) beiderseits der anteroposterioren Ebene (XZ) erstreckt, wobei der vordere Abschnitt (5) eine obere Strukturbaugruppe (30) umfasst, die sich unter dem Hauptrotor (8) befindet, wobei das statische Lufteinlasssystem (40) einen statischen Lufteinlass (41) umfasst, wobei die obere Strukturbaugruppe (30) eine zur hinteren Baugruppe (15) gerichtete Rückseite (33) und eine zum Hauptrotor (8) gerichtete Oberseite (32) umfasst, die teilweise einen Innenraum (INT) der oberen Strukturbaugruppe (30) begrenzen, wobei der statische Lufteinlass eine Durchgangsöffnung (42) aufweist, die in der oberen Strukturbaugruppe (30) vorgesehen ist, wobei die Durchgangsöffnung (42) in der Rückseite oder der Oberseite der oberen Strukturbaugruppe (30) vorgesehen ist, wobei die Durchgangsöffnung (42) eine Schnittstelle zwischen dem Medium (EXT) und dem Innenraum (INT) der oberen Strukturbaugruppe (30) bildet,
**dadurch gekennzeichnet, dass** das statische Lufteinlasssystem (40) mindestens einen Separator (50) umfasst, der die Durchgangsöffnung (42) in mindestens zwei getrennte Durchlässe (43, 44) unterteilt, wobei der Separator (50) einen ersten Abschnitt (51) umfasst, der durch einen zweiten Abschnitt (52) verlängert ist, wobei sich der erste Abschnitt (51) in dem Innenraum (INT) erstreckt und der zweite Abschnitt (52) sich außerhalb des Innenraums (INT) erstreckt, wobei sich der zweite Abschnitt (52) in einer Längsrichtung (D1) parallel zu einer Strömungsrichtung der Außenluft um die Durchgangsöffnung herum erstreckt, wenn das Luftfahrzeug einen Vorwärtsflug bei Windstille und ohne Seitwärtsdrift durchführt.

2. Luftfahrzeug nach Anspruch 1,
**dadurch gekennzeichnet, dass** sich der Separator (50) quer in einer Querrichtung (D2) von einer ersten Seitenfläche (60) zu einer zweiten Seitenfläche (65) erstreckt, dass die Querrichtung (D2) senkrecht zu der anteroposterioren Ebene (XZ) ist, und dass die erste Seitenfläche (60) und die zweite Seitenfläche (65) quer beiderseits der anteroposterioren Ebene (XZ) angeordnet sind.

3. Luftfahrzeug nach einem der Ansprüche 1 bis 2,
**dadurch gekennzeichnet, dass** sich der Separator (50) quer in einer Querrichtung (D2) von einer ersten Seitenfläche (60) zu einer zweiten Seitenfläche (65) erstreckt, dass die Querrichtung (D2) senkrecht zur anteroposterioren Ebene (XZ) ist, und dass der Separator (50) eine Dicke (W) aufweist, die die erste Seitenfläche (60) und die zweite Seitenfläche (65) quer trennt, wobei die Dicke (W) weniger als ein Zentimeter beträgt.

4. Luftfahrzeug nach Anspruch 3,
**dadurch gekennzeichnet, dass** die Dicke (W) nicht konstant ist, und dass der Separator (50) einen vorgegebenen Dickenverlauf hat.

5. Luftfahrzeug nach einem der Ansprüche 2 bis 4,
**dadurch gekennzeichnet, dass** die erste Seitenfläche (60) sich von einem ersten vorderen Rand (61) zu einem ersten hinteren Rand (62) erstreckt, die zweite Seitenfläche (65) sich von einem zweiten vorderen Rand zu einem zweiten hinteren Rand (66) erstreckt, dass der Separator (50) eine abgerundete Vorderkante (70) aufweist, die den ersten vorderen Rand (61) mit dem zweiten vorderen Rand verbindet, und dass der Separator (50) eine abgerundete Hinterkante (71) aufweist, die den ersten hinteren Rand (62) mit dem zweiten hinteren Rand (66) verbindet.

6. Luftfahrzeug nach einem der Ansprüche 1 bis 5,
**dadurch gekennzeichnet, dass** die Durchgangsöffnung (42) eine vorgegebene charakteristische Abmessung (D) aufweist, wobei die charakteristische Abmessung (D) gleich der Quadratwurzel einer Fläche einer Projektion der Durchgangsöffnung (42) in eine Projektionsebene ist, wobei die Projektionsebene orthogonal zu einer Strömungsrichtung der Luft um die Durchgangsöffnung herum ist, wenn das Luftfahrzeug bei Windstille und ohne Seitwärtsdrift einen Vorwärtsflug durchführt, und dass sich der erste Abschnitt (51) in dem Innenraum (INT) in einer Saugrichtung (ASP1) der Luft parallel zu einer Richtung der Vorwärtsbewegung des Luftfahrzeugs über eine erste Länge (Li) erstreckt, die größer oder gleich einem Viertel der vorgegebenen charakteristischen Abmessung (D) ist.

7. Luftfahrzeug nach einem der Ansprüche 1 bis 5,
**dadurch gekennzeichnet, dass** die Durchgangsöffnung (42) eine vorbestimmte charakteristische Abmessung (D) aufweist, wobei die charakteristische Abmessung (D) gleich der Quadratwurzel einer Fläche einer Projektion der Durchgangsöffnung (42) in eine Projektionsebene ist, wobei die Projektionsebene orthogonal zu einer Strömungsrichtung der Luft um die Durchgangsöffnung herum ist, wenn das Luftfahrzeug bei Windstille und ohne Seitwärtsdrift einen Vorwärtsflug durchführt, und dass sich der zweite Abschnitt (52) außerhalb des Innenraums (INT) entlang der Strömungsrichtung über eine zweite Länge (Lo) erstreckt, die größer oder gleich der Hälfte der vorgegebenen charakteristischen Abmessung (D) ist.

8. Luftfahrzeug nach den Ansprüchen 6 und 7,
**dadurch gekennzeichnet, dass** die erste Länge (Li) größer als die Hälfte der vorgegebenen charakteristischen Abmessung (D) ist, und dass die zweite Länge (Lo) zwischen der Hälfte der vorgegebenen charakteristischen Abmessung (D) einschließlich und einem ersten Quotienten einschließlich liegt, wobei der erste Quotient gleich dem Neunfachen der vorgegebenen charakteristischen Abmessung (D) geteilt durch vier ist.

9. Luftfahrzeug nach den Ansprüchen 6 und 7,
**dadurch gekennzeichnet, dass** die zweite Länge zwischen der Hälfte der vorgegebenen charakteristischen Abmessung einschließlich und einem ersten Quotienten einschließlich liegt, wobei dieser erste Quotient gleich dem Neunfachen der vorgegebenen charakteristischen Abmessung (D) geteilt durch vier ist, wobei die erste Länge zwischen dem Viertel der vorgegebenen charakteristischen Abmessung einschließlich und einem zweiten Quotienten einschließlich liegt, wobei dieser zweite Quotient gleich dem Neunfachen der vorgegebenen charakteristischen Abmessung (D) geteilt durch sechzehn ist.

10. Luftfahrzeug nach einem der Ansprüche 1 bis 9,
**dadurch gekennzeichnet, dass** die mindestens zwei Durchlässe (43, 44) in Bezug auf den Separator (50) symmetrisch sind.

11. Luftfahrzeug nach einem der Ansprüche 1 bis 10,
**dadurch gekennzeichnet, dass** sich der zweite Abschnitt (52) in der Vertikalen von einer Basis (53) zu einem oberen Ende (54) über eine Höhe (H) erstreckt, dass sich der zweite Abschnitt (52) in Längsrichtung von einem ersten Ende (55) zu einem zweiten Ende (56) erstreckt, und dass die Höhe (H) von dem ersten Ende (55) zu dem zweiten Ende (56) gemäß einer vorgegebenen Höhenänderungsregel abnimmt.

12. Luftfahrzeug nach einem der Ansprüche 1 bis 11, bei dem die Durchgangsöffnung in der Oberseite der oberen Strukturanordnung vorgesehen ist, **dadurch gekennzeichnet, dass** sich der zweite Abschnitt (52) in Längsrichtung stromaufwärts und stromabwärts der Durchgangsöffnung (42) in Bezug auf eine Strömungsrichtung (200) der Außenluft relativ zum Luftfahrzeug (1) erstreckt, wobei der Separator (50) T-förmig ist.

13. Luftfahrzeug nach Anspruch 12, soweit von Anspruch 7 abhängig,
**dadurch gekennzeichnet, dass** die Durchgangsöffnung (42) eine Scheibe (85) beschreibt, die auf einer Symmetrieachse (AX) zentriert ist und einen Durchmesser (86) aufweist, dass die Symmetrieachse (AX) einen stromaufwärtigen Abschnitt (87) und einen stromabwärtigen Abschnitt (88) von dem zweiten Abschnitt (52) trennt, der stromaufwärtige Abschnitt (87) sich über eine stromaufwärtige Verlängerungslänge (Lom) und der stromabwärtige Abschnitt sich über eine stromabwärtige Verlängerungslänge (Lov) erstreckt, und die stromaufwärtige Verlängerungslänge (Lom) und die stromabwärtige Verlängerungslänge (Lov) jeweils gleich der zweiten Länge ist.

14. Verfahren zur Behandlung eines Schwingungsphänomens eines Luftfahrzeugs (1), das mit einem statischen Lufteinlasssystem (40) versehen ist, um Außenluft anzusaugen, die in einem Medium (EXT) außerhalb des Luftfahrzeugs (1) vorhanden ist, und um diese Außenluft zu mindestens einem Triebwerk der Triebwerksanlage (2) des Luftfahrzeugs (1) zu leiten, wobei das Luftfahrzeug (1) einen vorderen Abschnitt (5) aufweist, der einen Hauptrotor (8) trägt, der mindestens am Auftrieb des Luftfahrzeugs (1) beteiligt ist, wobei das Luftfahrzeug (1) eine hintere Baugruppe (15) aufweist, wobei sich das Luftfahrzeug (1) in Längsrichtung entlang einer anteroposterioren Ebene (XZ) in einer Vorwärtsrichtung von einem hinteren Ende (17) der hinteren Baugruppe (15) zu einer Nase (9) des vorderen Abschnitts (5) erstreckt, wobei sich das Luftfahrzeug in Querrichtung von einer ersten Flanke (3) zu einer zweiten Flanke (4) beiderseits der anteroposterioren Ebene (XZ) erstreckt, wobei der vordere Abschnitt (5) eine obere Strukturbaugruppe (30) umfasst, die sich unter dem Hauptrotor (8) befindet, wobei die obere Strukturbaugruppe (30) eine zur hinteren Baugruppe (15) gerichtete Rückseite (33) und eine zum Hauptrotor (8) gerichtete Oberseite (32) aufweist, die teilweise einen Innenraum (INT) der oberen Strukturbaugruppe (30) begrenzen, wobei das statische Lufteinlasssystem (40) einen statischen Lufteinlass (41) aufweist, der in der oberen Strukturbaugruppe (30) vorgesehen ist, wobei die Durchgangsöffnung (42) in der Rückseite oder der Oberseite der oberen Strukturbaugruppe (30) vorgesehen ist, wobei der statische Lufteinlass (41) eine Durchgangsöffnung (42) aufweist, die eine Schnittstelle zwischen dem externen Medium (EXT) und einem Innenraum (INT) der oberen Strukturbaugruppe (30) bildet,
**dadurch gekennzeichnet, dass** das Verfahren den folgenden Schritt umfasst:
Anordnen mindestens eines Separators (50), der die Durchgangsöffnung (42) in mindestens zwei getrennte Durchlässe (43, 44) unterteilt, wobei der Separator (50) einen ersten Abschnitt (51) aufweist, der durch einen zweiten Abschnitt (52) verlängert ist, wobei der erste Abschnitt (51) sich in dem Innenraum (INT) erstreckt und der zweite Abschnitt (52) sich außerhalb des Innenraums (INT) erstreckt, wobei sich der zweite Abschnitt (52) in einer Längsrichtung (D1) parallel zu einer Strömungsrichtung der Außenluft um die Durchgangsöffnung herum erstreckt, wenn das Luftfahrzeug bei Windstille und ohne Schleudern vorwärts fliegt.

15. Verfahren nach Anspruch 14,
**dadurch gekennzeichnet, dass** das Luftfahrzeug mindestens einem der Ansprüche 2 bis 13 entspricht.

## Claims

1. Aircraft (1) provided with a static air inlet system (40) in order to draw external air present in an external environment (EXT) to the aircraft (1) and to direct the external air towards at least one motor of a driving installation (2) of the aircraft (1), the aircraft (1) comprising a front portion (5) which includes a main rotor (8) which is involved at least in the lift of the aircraft (1), the aircraft (1) comprising a rear assembly (15), the aircraft (1) extending longitudinally along an anteroposterior plane (XZ) in an advance direction towards the front from a rear end (17) of the rear assembly as far as a nose (9) of the front portion (5), the aircraft (1) extending transversely from a first flank (3) to a second flank (4) at one side and the other of the anteroposterior plane (XZ), the front portion (5) comprising an upper structural assembly (30) located below the main rotor (8), the static air inlet system (40) comprising a static air inlet opening (41), the upper structural assembly (30) comprising a rear face (33) which is directed towards the rear assembly (15) and an upper face (32) directed towards the main rotor (8) which partially delimit an internal space (INT) of the upper structural assembly (30), the static air inlet opening comprising a passage opening (42) provided in the upper structural assembly (30), the passage opening (42) being provided in the rear face or the upper face of the upper structural assembly (30), the passage opening (42) forming an interface between the environment (EXT) and the internal space (INT) of the upper structural assembly (30), **characterised in that** the static air inlet system (40) comprises at least one separator (50) which divides the passage opening (42) into at least two separate apertures (43, 44), the separator (50) comprising a first portion (51) which is extended by a second portion (52), the first portion (51) extending into the inner space (INT) and the second portion (52) extending outside the inner space (INT), the second portion (52) extending in a longitudinal direction (D1) parallel with a flow direction of the external air around the passage opening when the aircraft carries out a forward advance flight in the absence of wind and without sideslipping.

2. Aircraft according to claim 1,
**characterised in that** the separator (50) extending transversely in a transverse direction (D2) from a first lateral face (60) to a second lateral face (65), the transverse direction (D2) being perpendicular to the anteroposterior plane (XZ), the first lateral face (60) and the second lateral face (65) are arranged transversely at one side and the other of the anteroposterior plane (XZ).

3. Aircraft according to either claim 1 or 2,
**characterised in that** the separator (50) extending transversely in a transverse direction (D2) from a first lateral face (60) to a second lateral face (65), the transverse direction (D2) being perpendicular to the anteroposterior plane (XZ), the separator (50) has a thickness (W) which transversely separates the first lateral face (60) and the second lateral face (65), the thickness (W) being less than one centimetre.

4. Aircraft according to claim 3,
**characterised in that** the thickness (W) is not constant, the separator (50) having a predetermined thickness law.

5. Aircraft according to any one of claims 2 to 4,
**characterised in that** the first lateral face (60) extending from a first front portion (61) to a first rear portion (62), the second lateral face (65) extending from a second front portion to a second rear portion (66), the separator (50) comprises a rounded front edge (70) which connects the first front portion (61) to the second front portion, the separator (50) comprising a rounded rear edge (71) which connects the first front portion (62) to the second rear portion (66).

6. Aircraft according to any one of claims 1 to 5,
**characterised in that** the passage opening (42) having a predetermined characteristic dimension (D), the characteristic dimension (D) being equal to the square root of an area of a projection of the passage opening (42) in a projection plane, the projection plane being orthogonal to a flow direction of the air around the passage opening when the aircraft carries out a forward advance flight in the absence of wind and without sideslipping, the first portion (51) extends in the internal space (INT) in an intake direction (ASP1) of the air parallel with a forward advance direction of the aircraft over a first length (Li) which is greater than or equal to a quarter of the predetermined characteristic dimension (D).

7. Aircraft according to any one of claims 1 to 5,
**characterised in that** the passage opening (42) having a predetermined characteristic dimension (D), the characteristic dimension (D) being equal to the square root of an area of a projection of the passage opening (42) in a plane of projection, the plane of projection being orthogonal to an air flow direction around the passage opening when the aircraft carries out a forward advance flight in the absence of wind and without sideslipping, the second portion (52) extends outside the internal space (INT) in the flow direction over a second length (Lo) greater than or equal to half the predetermined characteristic dimension (D).

8. Aircraft according to claims 6 and 7,
**characterised in that** the first length (Li) is greater than half the predetermined characteristic dimension (D), the second length (Lo) being between half of the predetermined characteristic dimension (D) inclusive and a first quotient inclusive, this first quotient being equal to nine times the predetermined characteristic dimension (D) divided by four.

9. Aircraft according to claims 6 and 7,
**characterised in that** the second length is between half the predetermined characteristic dimension inclusive and a first quotient inclusive, this first quotient being equal to nine times the predetermined characteristic dimension (D) divided by four, the first length being between a quarter of the predetermined characteristic dimension inclusive and a second quotient inclusive, this second quotient being equal to nine times the predetermined characteristic dimension (D) divided by sixteen.

10. Aircraft according to any one of claims 1 to 9,
**characterised in that** the at least two apertures (43, 44) are symmetrical with respect to the separator (50).

11. Aircraft according to any one of claims 1 to 10,
**characterised in that** the second portion (52) extending in elevation over a height (H) from a base (53) to a peak (54), the second portion (52) extending longitudinally from a first end (55) as far as a second end (56), the height (H) decreases from the first end (55) towards the second end (56) according to a predetermined height variation law.

12. Aircraft according to any one of claims 1 to 11, the passage opening being provided in the upper face of the upper structural assembly,
**characterised in that** the second portion (52) extends longitudinally upstream and downstream of the passage opening (42) opposite a flow direction (200) of the external air relative to the aircraft (1), the separator (50) being T-shaped.

13. Aircraft according to claim 12 when dependent on claim 7,
**characterised in that** the passage opening (42) describing a disc (85) which is centred on an axis of symmetry (AX) and which has a diameter (86), the axis of symmetry (AX) separating an upstream portion (87) and a downstream portion (88) of the second portion (52), the upstream portion extending over an upstream extension length (Lom) and the downstream portion extending over a downstream extension length (Lov), the upstream extension length (Lom) and the downstream extension length (Lov) are each equal to the second length.

14. Method for processing a vibration phenomenon of an aircraft (1) which is provided with a static air inlet system (40) in order to draw in external air which is present in an external environment (EXT) to the aircraft (1) and to direct the external air to at least one motor of the driving installation (2) of the aircraft (1), the aircraft (1) comprising a front portion (5) which carries a main rotor (8) which is involved at least in the lift of the aircraft (1), the aircraft (1) comprising a rear assembly (15), the aircraft (1) extending longitudinally along an anteroposterior plane (XZ) in a forward advance direction from a rear end (17) of the rear assembly (15) as far as a nose (9) of the front portion (5), the aircraft extending transversely from a first flank (3) to a second flank (4) at one side and the other of the anteroposterior plane (XZ), the front portion (5) comprising an upper structural assembly (30) located below the main rotor (8),
the upper structural assembly (30) comprising a rear face (33) which is directed towards the rear assembly (15) and an upper face (32) which is directed towards the main rotor (8) which partially delimit an internal space (INT) of the upper structural assembly (30), the static air inlet system (40) comprising a static air inlet opening (41) provided in the upper structural assembly (30), the passage opening (42) being provided in the rear face or the upper face of the upper structural assembly (30), the static air inlet opening (41) comprising a passage opening (42) which forms an interface between the external environment (EXT) and an internal space (INT) of the upper structural assembly (30),
**characterised in that** the method comprises the following step:
arranging at least one separator (50) which divides the passage opening (42) into at least two separate apertures (43, 44), the separator (50) comprising a first portion (51) which is extended by a second portion (52), the first portion (51) extending into the internal space (INT) and the second portion (52) extending outside the internal space (INT), the second portion (52) extending in a longitudinal direction (D1) parallel with a flow direction of the external air around the passage opening when the aircraft carries out a forward advance flight in the absence of wind and without sideslipping.

15. Method according to claim 14,
**characterised in that** the aircraft is in accordance with at least one of claims 2 to 13.
